# EUROPEAN PATENT SPECIFICATION

(11) **EP 2 313 171 B1**
(45) Date of publication and mention of the grant of the patent: **30.04.2014**
(21) Application number: 09786772.5
(22) Date of filing: 31.07.2009
(51) Int. Cl.: A63F 9/00, G06F 3/00, G06F 3/048, G06F 3/02

(54) **SYSTEM, CARRIER, PROGRAM AND CONTROLLABLE DEVICE**
SYSTEM, TRÄGER, PROGRAMM UND STEUERBARE VORRICHTUNG
SYSTÈME, SUPPORT, PROGRAMME ET DISPOSITIF COMMANDABLE

(30) Priority: 06.08.2008 EP 08104976
(43) Date of publication of application: 27.04.2011
(73) Proprietor: NXP B.V., 5656 AG Eindhoven (NL)
(72) Inventor: TARRANT, David, NL-5656 AE Eindhoven (NL); WALDOCK, Ian, NL-5656 AE Eindhoven (NL); LAM, Alister, NL-5656 AE Eindhoven (NL); GLYNNE-JONES, Alan, NL-5656 AE Eindhoven (NL); THORNE, Nick David Lane, NL-5656 AE Eindhoven (NL)
(74) Representative: Schwarzweller, Thomas
(86) International application number: PCT/IB2009/053343
(87) International publication number: WO 2010/015978

(56) References cited:
- JP-A- 2006 039 774

## Description

### FIELD OF THE INVENTION

The present invention relates to a system including a controllable device for executing a program.

The present invention further relates to a data storage medium comprising a program for such a system.

The present invention further relates to a carrier for such a system.

The present invention further relates to a controllable device for such a system.

### BACKGROUND OF THE INVENTION

Remotely controllable devices are commonplace nowadays. Information to control such devices may be provided by a remote control configured to send a plurality of unique signals that are interpreted by the controllable device, e.g. a games console, a computer, a display device, a radio, a CD or DVD player and so on, as control signals to specify or modify an operational parameter of the device, such as channel selection, volume level, display brightness or contrast adjustments and so on. The remote control may also be used to control a program executed on the controllable device. This is for instance the case on game consoles such as the Nintendo Wii^{™}, where the so-called Wiimote^{™} is used for providing control signals to a program, i.e. a computer game, executing on the controllable device.

The remote controls for such systems have in common that they require the use of several buttons to generate the necessary input signals to be received by the controllable device. This makes these systems less accessible for users having limited control over their hands, such as sufferers from neurological disorders such as Parkinson's disease, elderly people, manually disabled people and very young children.

It is known to use near-field communication (NFC) to configure an animation. For example, the Orooni table described on http://www.nearfield.org/2006/09/orooni-table, provides a table comprising a number of radio frequency (RF) identification (ID) tag readers mounted under its surface. The readers correspond to different animations. The placement of a character figurine comprising an RF-ID tag over one of the RF-ID tag readers triggers the launch of a specific animation including that figurine based on the identification information stored in the RF-ID tag and the reader onto which the figurine has been placed. However, once these animations have been launched, the user has no control over the animation program itself.

JP 2006039774 discloses a system according to the preamble of claim 1.

### SUMMARY OF THE INVENTION

The present invention seeks to provide a system including a controllable device for executing a program for which program input can be generated more easily.

In accordance with a first aspect of the present invention, there is provided a system comprising a controllable device (10) for executing a program; and a carrier having a surface comprising a plurality of surface markings, each marking being located over a RF tag embedded in the carrier, each RF tag comprising a unique identification code; wherein the program, when executed on the controllable device, is adapted to generate a plurality of selectable options, each of said options being selectable by one of the unique identification codes.

Such a system allows a user to select the options by means of approaching the corresponding surface markings of the carrier with an RF reader to establish a communicative contact with the underlying RF tag, which makes it easier to select the desired options because no force has to be exerted to press a button on a remote control or the like. This makes the system of the present invention more accessible to manually impaired users.

Preferably, the system further comprises an RF reader for communicating said identification codes to the controllable device, wherein the controllable device is arranged to interpret each identification code as an input signal for said program.

This system allows for program input data to be provided to the controllable device by means of near-field communication between the RF tags in the carrier, which may be pad-shaped, and an RF tag reader, which may forward the information extracted from the RF tag to the communication device.

In an embodiment, the program comprises a module for displaying a plurality of pictograms in a spatial layout on a display device, each pictogram corresponding to a program input, wherein at least some of the surface markings of the carrier are laid out on said surface in the spatial layout. This has the advantage that the input signals of the pad can be more easily reconfigured because different programs can generate an easy association between a particular input function specific to that program and the carrier by correlating that function to a pictogram positioned in the spatial layout, such that the user will immediately recognize that the specific function can be selected by establishing a communication between the RF reader and the RF tag placed under the surface marking in the same position of the spatial layout as the pictogram.

In another embodiment, the program is adapted to highlight one of said pictograms to instruct a user of the system to establish a communication between the RF reader and the RF tag underneath the surface marking in the corresponding position of the spatial layout. This for instance makes it possible to test the user's responsiveness to the highlighted pictograms. This can not only be advantageously applied in gaming applications but also in medical environments where the responsiveness may be linked to cognitive abilities or visual impairments, e.g. partial blindness or color blindness.

The carrier may further comprise a set of surface markings outside the spatial layout, wherein the module is responsive to the identification codes of the respective RF tags underneath the set of surface markings outside the spatial layout. Such other surface markings may for instance be used to trigger the program module to generate the spatial layout of pictograms.

Advantageously, the program is further adapted to generate a plurality of menu icons on the display, the surface markings outside the spatial layout corresponding to the menu icons, the program being further arranged to generate the plurality of pictograms in response to a selected menu icon. This way, different selection menus may be generated in the form of the spatial layout by selecting the appropriate set of menu options by means of the surface markings outside the spatial layout. For instance, different color palettes may be generated by the program in the form of the spatial layout after selecting the color group by means of a carrier surface marking outside the spatial layout.

The RF reader may be configured to establish a communication with one of said RF tags when the RF reader is within a predefined distance of the corresponding surface marking, said predefined distance being smaller than the spacing between two neighboring surface markings. This may be achieved by the RF reader transmitting an induction field that is relatively weak such that the RF tag underneath a surface marking is only activated when the RF reader is brought within close vicinity, e.g. in contact, with the marking. This has the advantage that the risk of activation of an unintended RF tag is reduced, thus improving the robustness of the system.

In an embodiment, the controllable device is further arranged to interpret the duration of the communication between one of said RF tags and the RF reader as a further input signal for said program. This may for instance be useful if the input signal is a control signal for defining the value of a parameter within a range of allowable parameter values, e.g. the volume level of the audio output generated by the program, or of a parameter associated with gaming content, e.g. the motion speed of a game object, and so on.

For instance, the program may be a game including a game character to be displayed on a display device, wherein said input signals control the game character. This facilitates the participation of manually impaired people to participate in such games.

In accordance with a further aspect of the present invention, there is provided carrier for use in a system of the present invention, said carrier comprising a plurality of surface markings, each marking being located over a RF tag embedded in the carrier, each RF tag comprising a unique identification code. This carrier allows a system user to generate program input signals without having to press keys.

In accordance with yet a further aspect of the present invention, there is provided a data storage medium comprising a program for use in the system of the present invention, said program being responsive to input signals retrieved from said carrier. This allows the program to be controlled by a user without having to press keys.

In accordance with yet a further aspect of the present invention, there is provided a controllable device for use in the system of the present invention, wherein the controllable device is arranged to interpret each identification code as an input signal for said program. This allows user control over the program during its execution on the controllable device without the user without having to press keys.

### BRIEF DESCRIPTION OF THE EMBODIMENTS

Embodiments of the invention are described in more detail and by way of non-limiting examples with reference to the accompanying drawings, wherein
Fig. 1 shows an embodiment of a system according to the present invention; and
Fig. 2-6 show application examples according to the present invention.

### DETAILED DESCRIPTION OF THE DRAWINGS

It should be understood that the Figures are merely schematic and are not drawn to scale. It should also be understood that the same reference numerals are used throughout the Figures to indicate the same or similar parts.

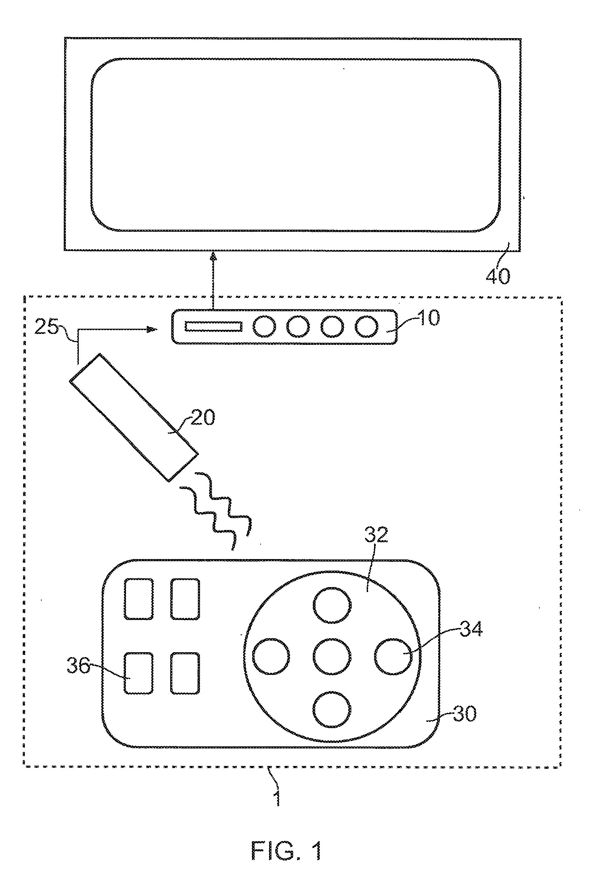

Fig. 1 shows a system 1 comprising a controllable device 10 and a RF tag reader 20 arranged to communicate with the controllable device 10 via a communication link 25, which may be a wired link or a wireless link using any suitable wireless protocol, e.g. Bluetooth, Zigbee, Wi-Fi and so on. The controllable device 10 may be arranged to provide a display 40 with an input signal. Alternatively, the controllable device 10 may be integrated in a display device such that the controllable device 10 forms part of the display device. It will be understood that the display 40 is not necessarily a part of the system 1. The controllable device 10 comprises a processor (not shown) for executing a program. The program, which may be embedded in the controllable device 10, stored on a storage medium (not shown) of the controllable device 10, e.g. a hard disk or solid state disk, or may be made available to the controllable device by being stored on a data storage medium that can be read by the controllable device 10, e.g. a DVD, CD, memory stick, internet server, and so on.

The program may be a game in case the controllable device 10 is a games console or a personal computer, although it is emphasized that this is not strictly necessary. For instance, the program may be any program that is susceptible to user input, e.g. the embedded software of a set-top box for controlling the channel selection, the embedded software of a display device for controlling the display settings of the display device and so on. In accordance with the present invention, the system 1 further includes a carrier 30 comprising a predefined spatial layout 32 of surface markings 34. The spatial layout typically corresponds with a spatial layout to be generated by the program when executed on the controllable device 10, as will be explained in more detail later. The carrier 30 may further comprise further surface markings 36, in which case the presence of the predefined spatial layout 32 of surface markings 34 may be optional. The surface markings 34 and/or 36 may take any suitable form or shape, as may the predefined spatial layout 32. For instance, the surface markings may comprise the same or different colors, pictograms, icons and so on. In case the surface markings are organized in a predefined spatial layout 32, individual surface markings may be identified by there relative position in the spatial layout, thus obviating the need for the surface markings having different appearances.

A separate RF-ID tag is located underneath each of the surface markings 34 and/or 36. Preferably, the RF-ID tags are passive tags, which only transmit the data stored in their memory when brought into an electric field, such as the field generated by the RF tag reader 20. Alternatively, the RF-ID tags may be active tags, i.e. tags that have their own power supply that continuously transmit their unique identification codes. In such tags are used, care has to be taken that the strength of the signal transmitted is weak to avoid a RF tag reader picking up multiple signals when approaching the carrier 30. For this reason, the use of passive RF-ID tags is preferred.

These tags may be integrated into the carrier 30 in any suitable way. For instance, the carrier 30 may be a laminated structure with the tags being secured between two layers of the laminated structure. Other embodiments will be readily available to the skilled person. Each of the RF-ID tags underneath the surface markings 34 has a unique identification code stored therein, which allows these tags to be identified by the RF tag reader 20 and/or the controllable device 10. Upon retrieval of such an identification code from the carrier 30, the RF tag reader 20 may simply forward the extracted identification code to the controllable device 10 or may first convert, e.g. parse the extracted identification code before forwarding it in a modified form to the controllable device 10.

The identification codes of the RF-ID tags in the carrier 30 are interpreted by the controllable device 10 as input data for the program running thereon. In the context of the present invention, 'input data' is intended to include instructions as well as responses to queries generated by the program. In an embodiment, the controllable device 10 may comprise table means, e.g. a look-up table or another suitable implementation of a table in which the identification codes are mapped against control signals for the program running on its processor (not shown). This for instance facilitates the use of the carrier 30 with different programs because each of these programs may be configured to load the relevant data into the table means upon launch on the controllable device 10.

In an embodiment, the carrier 10 is in the shape of a mat. The mat may be made of any suitable material. The dimensions of the mat may be chosen such that a manually disabled user of the system 1 can approach an individual surface marking 34 or 36 without difficulty. This typically means that the distance between the boundaries of the neighboring surface markings is large enough, e.g. more than 1 cm, more than 5 cm or even more than 10 cm such that a user that has difficulty pinpointing a RF tag reader 20 still can comfortably use the carrier 30. Other shapes for the carrier 30 are however equally feasible.

To further reduce the risk of the user inadvertently selecting the wrong surface marking, the strength of the induction field generated by the RF tag reader 20 to activate the passive RF-ID tags under the surface markings 34 and 36 may be set to a level such that the tags are only activated when the RF tag reader 20 is in brought in close proximity to the surface markings, e.g. within touching distance.

The carrier 30 may comprise groups of surface markings that invoke different types of functions within the program. For instance, the program may comprise a hierarchical structure, for instance by comprising various selection menus, with each menu comprising a plurality of selectable items. A first group of the surface markings, e.g. surface markings 36 may be responsible for selecting the higher hierarchy option, e.g. the correct selection menu, whereas a second group of surface markings, e.g. surface markings 34, may be responsible for selecting the lower hierarchy option, e.g. the correct item from the selected selection menu. It will be appreciated that carrier 30 may comprise more than two of such groups of surface markings.

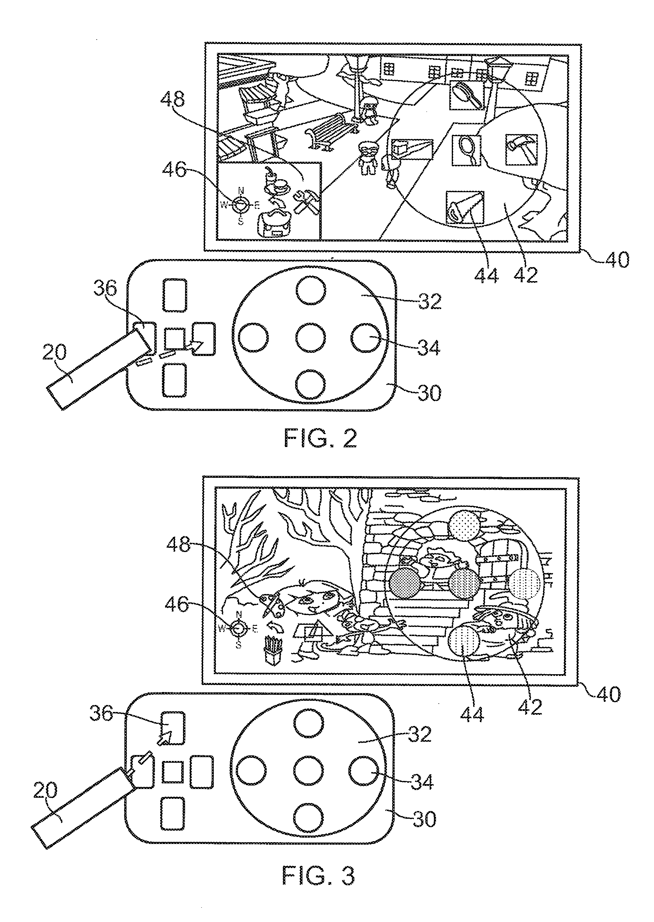

The system of the present invention is particularly suitable for gaming applications, as is demonstrated by the examples shown in Figs. 2-5.

In Fig. 2, the RF-tag reader 20 is shown in action. The surface markings 36 on the carrier 30 correspond to the icons 46 in the bottom left corner of the display device 40. The icons 40 have been generated by the game program running on the controllable device 10 (not shown in Fig.2). The surface markings 34 on the carrier 30 are laid out in a spatial pattern 32 corresponding to the spatial pattern 42 including pictograms 44 shown in the right half of the display device 40.

During playing the game, by touching the surface marking 36, in this case a colored rectangle, with the RF tag reader 20, the options corresponding to the icon 46 in the display area are displayed in the spatial pattern 40 on the right half of the display screen and the player can choose the preferred option by touching the corresponding surface marking 34, here a circle, on the carrier 30. The spatial pattern 40 may be generated by a dedicated module of the program. This will be apparent to the skilled person.

For example, in this case, tools are currently displayed by means of pictograms 44 selected by tool icon 48, but the user is about to touch the surface marking 36, i.e., the rectangle, which corresponds to a compass icon 46, leading to the four directions of the compass appearing in the pictograms 44 of the spatial pattern 42, thereby allowing the user to choose the appropriate surface marking 34 to change the direction of e.g. the game character.

One of the surface markings 36 may corresponds to a back button, which directs the game back to the previously selected menu. It is pointed out that length of time the RF tag reader 20 is held to the surface marking 34 or 36 can also influence the game play. For instance, the longer the reader is held, the faster the speed of movement, the strength of throw and so on of the game character. In general, the duration of the communicative contact between the RF tag reader 20 and one of the RF-ID tags under the surface markings 34 or 36 can be used as a further input for the program running on the controllable device 10.

Fig. 3 shows another example, wherein the game is a drawing game for children. The left hand menu on the display 40 includes the compass icon 46 and the color palette 48. During the game, the player may select the color palette 48 by approaching the appropriate surface marking 36 with the RF tag reader 20, after which the program generates a palette of colors 44 in the spatial pattern 42, which may be selected by approaching the surface marking 34 in the corresponding position in the spatial pattern 32 on the carrier 30. Other drawing options, e.g. using pencils rather than brushes may be selected by selecting another surface marking 36 instead.

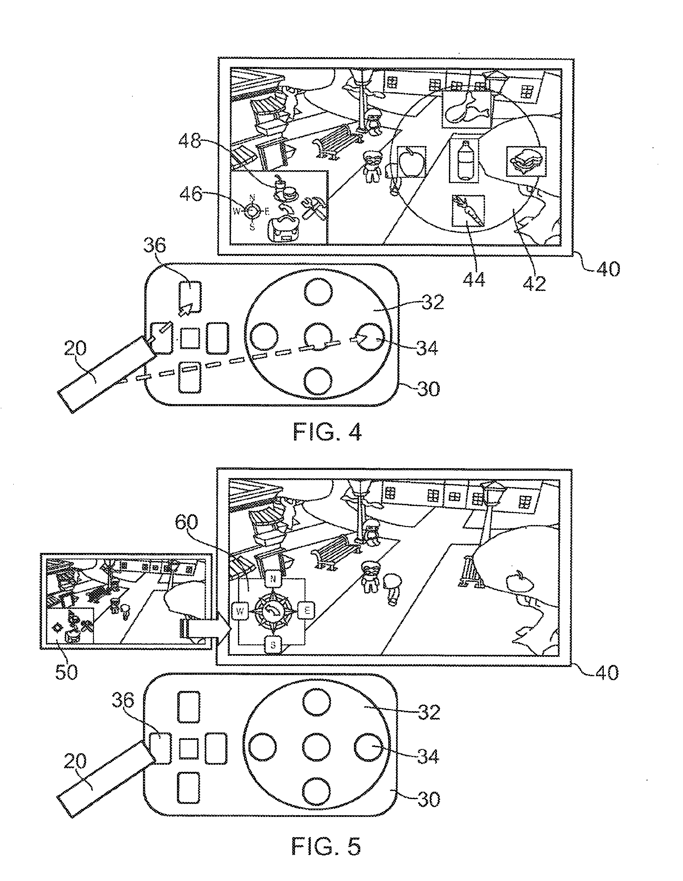

Fig. 4 shows yet another example in which a games character carries a number of different types of items, as displayed in the left hand bottom corner menu of the display 40. Fig. 4 has been based on a game scene retrieved from the internet: The menu may for instance include a food icon 48 as well as the character movement compass 46. By approaching the surface marking 36 corresponding to the food icon 48, the game program is triggered to display the food items 44 carried by the game character in the spatial pattern 42, after which the player can select the food item he wants the game character to consume by touching the corresponding surface marking 34 in the spatial pattern 32 of the carrier 30.

Fig. 5 shows an alternative example, in which a menu 50 includes a character movement compass. The selection of this compass by means of one of the surface markings 36 subsequently enables the user to use the surface markings 36 to control the movement direction of the game character, with one of the surface markings 36 being reserved to return back to the menu 50. In more general terms, the selection of a menu option in the program of the present invention may also cause the reconfiguration of the instructions triggered by the group of surface markings from which the menu option was selected.

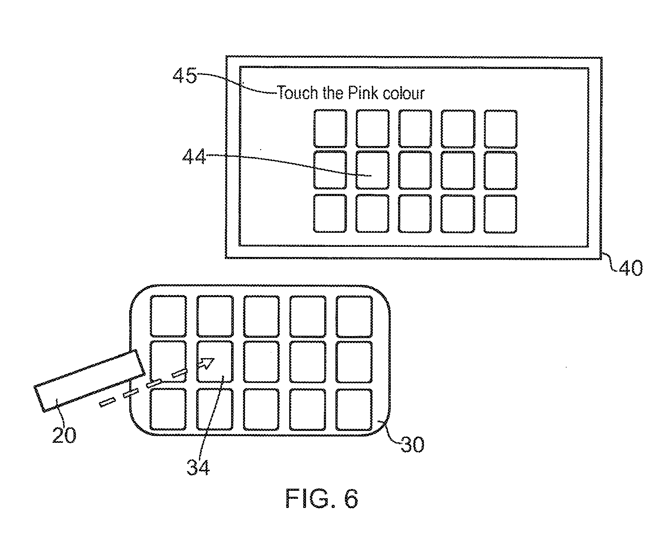

It is emphasized that the layout of the carrier 30 and the nature of the program of the present invention are not limited to the above examples, as for instance is demonstrated by Fig. 6. Here, the program is a program for testing a certain ability of its user, such as color recognition or reaction speed. For instance, the program may trigger the display of a number of color pictograms 44, in combination with an instruction 45 triggering the user to select the color as instructed by the instruction 45 and/or the color pictogram 44. In case of a color blindness test, the colored surface markings 34 on the carrier 30 will typically be arranged in a different order than on the display screen, whereas in a reaction speed test this is not necessarily the case. The program may be further arranged to collect user response data, which may be retrieved, e.g. by a medical practitioner, to make an assessment of the ability under investigation.

Alternatively, each time an RF-ID tag under one of the surface markings 34 is correctly addressed, the data in the RF-ID tag may be updated accordingly. This for instance facilitates the distribution of the test over a plurality of systems 1, by transferring the carrier 30 from one system to another in a different location. It further facilitates the carrier 30 to be passed onto the medical practitioner after the completion of the test, such that the medical practitioner does not have to be present when the user takes or completes the test. The medical practitioner may retrieve the data from the carrier 30 at a later date to assess the ability and/or condition of the user.

At this point, it is emphasized that several elements of the system 1 of the present invention may also be provided in isolation, such as the carrier 30, the controllable device 10 and the program designed to be controlled by the carrier 30. This program may also be provided in combination with the carrier 30, for instance when the program is a game and the carrier 30 is specifically designed to provide a user-interface for that game.

For the sake of completeness, it is noted that Figs. 2, 4 and 5 have been based on an image retrieved from the internet: http://my.opera.com/Nplus/blog/index.dml/tag/mii, and Fig. 3 has been based on another image retrieved from the internet: http://www.nickjr.com/printables/dora-saves-the-prince.jhtml?path=/printables/dora-the-explorer/coloring-pages/all-ages/index.jhtml.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention can be implemented by means of hardware comprising several distinct elements. In the device claim enumerating several means, several of these means can be embodied by one and the same item of hardware. The mere fact that certain measures are recited in mutually different dependent claims does not indicate that a combination of these measures cannot be used to advantage.

## Claims

1. A system (1) comprising:
a controllable device (10) for executing a program; and
a carrier (30) having a surface comprising a plurality of surface markings (34, 36), each marking being located over a RF tag embedded in the carrier, each RF tag comprising a unique identification code;
**characterised in that** the program, when executed on the controllable device, is adapted to generate a plurality of selectable options, each of said options being selectable by one of the unique identification codes.

2. The system of claim 1, further comprising an RF reader (20) for communicating said identification codes to the controllable device (10), wherein the controllable device (10) is arranged to interpret each identification code as an input signal for said program.

3. The system (1) of claim 1 or 2, wherein the program comprises a module for displaying the selectable options in the forms of a plurality of pictograms (44) in a spatial layout (42) on a display.device, each pictogram (44) corresponding to a program input, wherein at least some of the surface markings (34) of the carrier (30) are laid out on said surface in the spatial layout (32).

4. The system (1) of claim 3, wherein the program is arranged to highlight one of said pictograms (44) to instruct a user of the system to establish a communication between the RF reader (20) and the RF tag underneath the surface marking (34) in the corresponding position of the spatial layout (32).

5. The system (1) of claim 2, 3 or 4, wherein the carrier (30) comprises a set of surface markings (36) outside the spatial layout (32), wherein the module is responsive to the identification codes of the respective RF tags underneath the set of surface markings (36) outside the spatial layout (30).

6. The system (1) of claim 5, wherein the program is further arranged to generate a plurality of menu icons (46, 48) on the display, the surface markings (36) outside the spatial layout (32) corresponding to the menu icons, the program being further arranged to generate the plurality of pictograms (44) in response to a selected menu icon (46, 48).

7. The system (1) of any of claims 2-6, wherein the RF reader (20) is configured to establish a communication with one of said RF tags when the RF reader (20) is within a predefined distance of the corresponding surface marking (34, 36), said predefined distance being smaller than the spacing between two neighboring surface markings.

8. The system (1) of any of claims 2-7, wherein the controllable device (10) is further arranged to interpret the duration of the communication between one of said RF tags and the RF reader (20) as a further input signal for said program.

9. A carrier (30) for use in a system (1) of any of claims 1-8, comprising a plurality of surface markings (34, 36), each marking being located over a RF tag embedded in the carrier (30), each RF tag comprising a unique identification code; wherein at least some of the surface markings (34) of the carrier are laid out on said surface in a spatial layout (32) intended to correspond to a spatial layout (42) of a plurality of pictograms (44) displayed on a display device by the program of said system (1).

10. A data storage medium comprising a program for use in the system (1) of any of claims 1-8, said program, when executed on the controllable device, being adapted to generate a plurality of selectable options, each of said options being selectable by one of the unique identification codes of the carrier of claim 9 or 10.

11. The data storage medium of claim 10, wherein said program is responsive to input signals retrieved from said carrier (30).

12. The data storage medium of claim 10 or 11, wherein the program further comprising a module for displaying a plurality of pictograms (44) in a spatial layout (42) on a display device, each pictogram (44) corresponding to a program input, wherein at least some of the surface markings (34) of the carrier (30) are laid out on said surface in the spatial layout (32).

13. The data storage medium of claim 12, wherein the program is further adapted to highlight one of said pictograms (44) to instruct a user of the system (1) to establish a communication between the RF reader (20) and the RF tag underneath the surface marking (34) in the corresponding position of the spatial layout (32).

14. A controllable device (10) for use in the system (1) of any of claims 2-8, wherein the controllable device is arranged to interpret each identification code as an input signal for said program.

## Patentansprüche

1. Ein System (1) aufweisend:
eine steuerbare Vorrichtung (10) zum Ausführen eines Programms; und
einen Träger (30), welcher eine Oberfläche hat, die eine Mehrzahl von Oberflächenmarkierungen (34, 36) aufweist, wobei sich jede Markierung über einem RF Tag befindet, das in dem Träger eingebettet ist, wobei jedes RF Tag einen einmaligen Identifikationscode aufweist;
**dadurch gekennzeichnet, dass**
das Programm, wenn es auf der steuerbaren Vorrichtung ausgeführt wird, eingerichtet ist, um eine Mehrzahl von auswählbaren Optionen zu erzeugen, wobei jede der Optionen mittels eines der einmaligen Identifikationscodes auswählbar ist.

2. Das System gemäß Anspruch 1, ferner aufweisend einen RF Leser (20) zum Kommunizieren der Identifikationscodes zu der steuerbaren Vorrichtung (10), wobei die steuerbare Vorrichtung (10) eingerichtet ist, um jeden Identifikationscode als ein Eingangssignal für das Programm zu interpretieren.

3. Das System (1) gemäß Anspruch 1 oder 2, wobei das Programm ein Modul aufweist zum Anzeigen der auswählbaren Optionen in den Formen einer Mehrzahl von Piktogrammen (44) in einem räumlichen Layout (42) auf einer Anzeige Vorrichtung, wobei jedes Piktogramm (44) zu einer Programmeingabe korrespondiert, wobei zumindest einige der Oberflächenmarkierungen (34) des Trägers (30) auf der Oberfläche in dem räumlichen Layout (32) angeordnet sind.

4. Das System (1) gemäß Anspruch 3, wobei das Programm eingerichtet ist, um eines der Piktogramme (44) hervorzuheben, um einen Benutzer des Systems anzuweisen, eine Kommunikation herzustellen zwischen dem RF Leser (20) und dem RF Tag unterhalb der Oberflächenmarkierung (34) in der korrespondierenden Position des räumlichen Layouts (32).

5. Das System (1) gemäß Anspruch 2, 3 oder 4, wobei der Träger (30) einen Satz von Oberflächenmarkierungen (36) außerhalb des räumlichen Layouts (32) aufweist, wobei das Modul auf die Identifikationscodes der jeweiligen RF Tags unterhalb des Satzes von Oberflächenmarkierungen (36) außerhalb des räumlichen Layouts (30) reagiert.

6. Das System (1) gemäß Anspruch 5, wobei das Programm ferner eingerichtet ist, um eine Mehrzahl von Menü Icons (46, 48) auf dem Anzeigeschirm zu erzeugen, wobei die Oberflächenmarkierungen (36) außerhalb des räumlichen Layouts (32) zu den Menü Icons korrespondieren, wobei das Programm ferner eingerichtet ist, um die Mehrzahl von Piktogrammen (44) zu erzeugen, als Reaktion auf ein ausgewähltes Menü Icon (46, 48).

7. Das System (1) gemäß irgendeinem der Ansprüche 2 bis 6, wobei der RF Leser (20) konfiguriert ist, um eine Kommunikation mit einem der RF Tags herzustellen, wenn der RF Leser (20) innerhalb eines vorher festgelegten Abstands zu der korrespondierenden Oberflächenmarkierung (34, 36) ist, wobei der vorher festgelegte Abstand kleiner als der Zwischenraum zwischen zwei benachbarten Oberflächenmarkierungen ist.

8. Das System (1) gemäß irgendeinem der Ansprüche 2 bis 7, wobei die steuerbare Vorrichtung (10) ferner eingerichtet ist, um die Dauer der Kommunikation zwischen einem der RF Tags und dem RF Leser (20) als ein weiteres Eingangssignal für das Programm zu interpretieren.

9. Ein Träger (30) zum Verwenden in einem System (1) gemäß irgendeinem der Ansprüche 1 bis 8, der Träger aufweisend eine Mehrzahl von Oberflächenmarkierungen (34, 36), wobei jede Markierung sich über einem RF Tag befindet, welcher in dem Träger (30) eingebettet ist, wobei jedes RF Tag einen einmaligen Identifikationscode aufweist; wobei zumindest einige der Oberflächenmarkierungen (34) des Trägers auf der Oberfläche in einem räumlichen Layout (32) angeordnet sind, welches vorgesehen ist, um zu einem räumlichen Layout (42) von einer Mehrzahl von Piktogrammen (44) zu korrespondieren, welche mittels des Programms des Systems (1) auf einer Anzeige Vorrichtung angezeigt wird.

10. Ein Datenspeicher Medium aufweisend ein Programm zum Verwenden in dem System (1) gemäß irgendeinem der Ansprüche 1 bis 8, wobei das Programm, wenn es auf der steuerbaren Vorrichtung ausgeführt wird, eingerichtet ist, um eine Mehrzahl von auswählbaren Optionen zu erzeugen, wobei jede der Optionen mittels einem der einmaligen Identifikationscodes des Trägers gemäß Anspruch 9 oder 10 auswählbar ist.

11. Das Datenspeicher Medium gemäß Anspruch 10, wobei das Programm auf Eingangssignale reagiert, die aus dem Träger (30) abgerufen werden.

12. Das Datenspeicher Medium gemäß Anspruch 10 oder 11, wobei das Programm ferner aufweist
ein Modul zum Anzeigen einer Mehrzahl von Piktogrammen (44) in einem räumlichen Layout (42) auf einer Anzeige Vorrichtung, wobei jedes Piktogramm (44) zu einer Programm Eingabe korrespondiert, wobei zumindest einige der Oberflächenmarkierungen (34) des Trägers (30) auf der Oberfläche in dem räumlichen Layout (32) angeordnet sind.

13. Das Datenspeicher Medium gemäß Anspruch 12, wobei das Programm ferner eingerichtet ist, um eines der Piktogramme (44) hervorzuheben, um einen Benutzer des Systems (1) anzuweisen, eine Kommunikation herzustellen zwischen dem RF Leser (20) und dem RF Tag unterhalb der Oberflächenmarkierung (34) in der korrespondierenden Position des räumlichen Layouts (32).

14. Eine steuerbare Vorrichtung (10) zum Verwenden in dem System (1) gemäß irgendeinem der Ansprüche 2 bis 8, wobei die steuerbare Vorrichtung eingerichtet ist, um jeden Identifikationscode als ein Eingangssignal für das Programm zu interpretieren.

## Revendications

1. Système (1) comprenant:
un dispositif contrôlable (10) pour exécuter un programme ; et
un support (30) ayant une surface comprenant une pluralité de repères de surface (34 , 36), chaque repère étant situé sur une étiquette RF noyée dans le support, chaque étiquette RF comprenant un code d'identification unique ;
**caractérisé en ce que** le programme, quand il est exécuté sur le dispositif contrôlable, est adapté pour générer une pluralité d'options sélectionnables, chacune desdites options étant sélectionnable par l'un des codes d'identification uniques.

2. Système selon la revendication 1, comprenant en outre un lecteur RF (20) pour communiquer lesdits codes d'identification au dispositif contrôlable (10), le dispositif contrôlable (10) étant agencé pour interpréter chaque code d'identification comme un signal d'entrée dudit programme.

3. Système (1) selon la revendication 1 ou 2, dans lequel le programme comprend un module pour afficher les options sélectionnables sous forme de pluralité de pictogrammes (44) dans un agencement spatial (42) sur un dispositif d'affichage, chaque pictogramme (44) correspondant à une entrée de programme, dans lequel au moins certains des repères de surface (34) du support (30) sont disposés sur ladite surface dans l'agencement spatial (32).

4. Système (1) selon la revendication 3, dans lequel le programme est agencé pour mettre en valeur l'un desdits pictogrammes (44) afin d'ordonner à un utilisateur du système d'établir une communication entre le lecteur RF (20) et l'étiquette RF sous le repère de surface (34) à la position correspondante de l'agencement spatial (32).

5. Système (1) selon la revendication 2, 3 ou 4, dans lequel le support (30) comprend un ensemble de repères de surface (36) en dehors de l'agencement spatial (32), dans lequel le module répond aux codes d'identification des étiquettes RF respectives sous l'ensemble de repères de surface (36) en dehors de l'agencement spatial (30).

6. Système (1) selon la revendication 5, dans lequel le programme est agencé en outre pour générer une pluralité d'icônes de menu (46, 48) sur l'afficheur, les repères de surface (36) en dehors de l'agencement spatial (32) correspondant aux icônes de menu, le programme étant agencé en outre pour générer la pluralité de pictogrammes (44) en réponse à une icône de menu sélectionnée (46, 48).

7. Système (1) selon l'une quelconque des revendications 2 à 6, dans lequel le lecteur RF (20) est configuré pour établir une communication avec l'une desdites étiquettes RF quand le lecteur RF (20) se trouve dans une distance prédéfinie du repère de surface correspondant (34, 36), ladite distance prédéfinie étant inférieure à l'espacement entre deux repères de surface voisins.

8. Système (1) selon l'une quelconque des revendications 2 à 7, dans lequel le dispositif contrôlable (10) est agencé en outre pour interpréter la durée de la communication entre l'une desdites étiquettes RF et le lecteur RF (20) comme un autre signal d'entrée dudit programme.

9. Support (30) destiné à être utilisé dans un système (1) selon l'une quelconque des revendications 1 à 8, comprenant une pluralité de repères de surface (34, 36), chaque repère étant situé sur une étiquette RF noyée dans le support (30), chaque étiquette RF comprenant un code d'identification unique ; dans lequel au moins certains des repères de surface (34) du support sont disposés sur ladite surface dans un agencement spatial (32) en vue de correspondre à un agencement spatial (42) d'une pluralité de pictogrammes (44) affichés sur un dispositif d'affichage par le programme dudit système (1).

10. Support de stockage de données comprenant un programme destiné à être utilisé dans le système (1) selon l'une quelconque des revendications 1 à 8, ledit programme, quand il est exécuté sur le dispositif contrôlable, étant adapté pour générer une pluralité d'options sélectionnables, chacune desdites options étant sélectionnable par l'un des codes d'identification uniques du support selon la revendication 9 ou 10.

11. Support de stockage de données selon la revendication 10, dans lequel ledit programme répond à des signaux d'entrée recouvrés depuis ledit support (30).

12. Support de stockage de données selon la revendication 10 ou 11, dans lequel le programme comprend en outre un module pour afficher une pluralité de pictogrammes (44) dans un agencement spatial (42) sur un dispositif d'affichage, chaque pictogramme (44) correspondant à une entrée de programme, dans lequel au moins certains des repères de surface (34) du support (30) sont disposés sur ladite surface dans l'agencement spatial (32).

13. Support de stockage de données selon la revendication 12, dans lequel le programme est agencé en outre pour mettre en valeur l'un desdits pictogrammes (44) afin d'ordonner à un utilisateur du système (1) d'établir une communication entre le lecteur RF (20) et l'étiquette RF sous le repère de surface (34) à la position correspondante de l'agencement spatial (32).

14. Dispositif contrôlable (10) destiné à être utilisé dans le système (1) selon l'une quelconque des revendications 2 à 8, dans lequel le dispositif contrôlable est agencé pour interpréter chaque code d'identification comme un signal d'entrée dudit programme.
